# EUROPEAN PATENT APPLICATION

(11) **EP 4 510 484 A1**
(43) Date of publication of application: **19.02.2025**
(21) Application number: 22936963.2
(22) Date of filing: 15.04.2022
(51) Int. Cl.: H04L 5/00, H04W 72/04

(54) **SIGNAL RECEIVING METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/087182
(87) International publication number: WO 2023/197318

(57) **Abstract**

The present application relates to the field of mobile communications. Disclosed are a signal receiving method and apparatus, and a device and a storage medium. The method comprises: a terminal determining a first time-domain position of a downlink positioning signal and second time-domain positions of downlink transmissions other than the downlink positioning signal; and according to the first time-domain position and the second time-domain positions, and a conflict determination rule, determining whether to receive the downlink positioning signal. According to a first time-domain position of a downlink positioning signal and second time-domain positions of downlink transmissions other than the downlink positioning signal, and a conflict determination rule, a terminal determining whether to receive the downlink positioning signal provides a means for a terminal to receive a downlink positioning signal and other downlink transmissions, such that the reliability of data transmission between the terminal and a network device is ensured.

## Description

### TECHNICAL FIELD

The present disclosure relates to the field of mobile communication, and in particular, to a signal receiving method, device, apparatus and storage medium.

### BACKGROUND

In a mobile communication system, a network device may send a downlink positioning signal to a terminal to locate a terminal, and the network device may also send other downlink transmissions than the downlink positioning signal to the terminal. As for the terminal, how to receive the downlink positioning signal and the other downlink transmission sent by the network device has become an urgent problem.

### SUMMARY

Embodiments of the present disclosure provide a signal receiving method, device, apparatus and storage medium, which provides a way for a terminal to determine how to receive a downlink positioning signal and an other downlink transmission to ensure reliability of data transmission between the terminal and a network device. The technical solutions are as follows:

An aspect of the present disclosure provides a signal receiving method, which is performed by a terminal, and includes:
determining a first time domain position of a downlink positioning signal and a second time domain position of an other downlink transmission than the downlink positioning signal; and
determining whether to receive the downlink positioning signal based on the first time domain position, the second time domain position and a conflict judging rule.

An aspect of the present disclosure provides a signal receiving device, including:
a position determining module, configured to determine a first time domain position of a downlink positioning signal and a second time domain position of an other downlink transmission than the downlink positioning signal; and
a rule determining module, configured to determine whether to receive the downlink positioning signal based on the first time domain position, the second time domain position and a conflict judging rule.

An aspect of the present disclosure provides a terminal, including: a processor; a transceiver connected with the processor; and a memory storing executable instructions of the processor, wherein the processor is configured to load and execute the executable instructions to implement the signal receiving method according to the above aspect.

An aspect of the present disclosure provides a computer-readable storage medium having stored thereon executable program codes that, when being loaded and executed by a processor, implement the signal receiving method according to the above aspect.

An aspect of the present disclosure provides a chip including a programmable logic circuit and/or a program instruction, and the chip runs on a terminal to implement the signal receiving method according to the above aspect.

An aspect of the present disclosure provides a computer program product that, when being executed by a processor of a terminal, implements the signal receiving method according to the above aspect.

In the signal receiving method provided by embodiments of the present disclosure, the terminal determines whether to receive the downlink positioning signal based on the first time domain position of the downlink positioning signal, the second time domain position of the other downlink transmission than the downlink positioning signal and the conflict judging rule, which provides a way for the terminal to determine how to receive the downlink positioning signal and the other downlink transmission to ensure reliability of data transmission between the terminal and a network device.

### BRIEF DESCRIPTION OF THE DRAWINGS

In order to more clearly illustrate the technical solutions in the embodiments of the present disclosure, the accompanying drawings to be used in the description of the embodiments will be briefly described below. Obviously, the accompanying drawings in the following description are only some of the embodiments of the present disclosure, and a person skilled in the art may obtain other accompanying drawings on the basis of these drawings without creative labor.
FIG. 1 illustrates a block diagram of a communication system according to an exemplary embodiment of the present disclosure;
FIG. 2 illustrates a flowchart of a signal receiving method according to an exemplary embodiment of the present disclosure;
FIG. 3 illustrates a schematic diagram of an overlapping time domain position according to an exemplary embodiment of the present disclosure;
FIG. 4 illustrates a schematic diagram of a non-overlapping time domain position according to an exemplary embodiment of the present disclosure;
FIG. 5 illustrates a schematic diagram of a first extended time domain according to an exemplary embodiment of the present disclosure;
FIG. 6 illustrates a flowchart of a method for transmitting a positioning report according to an exemplary embodiment of the present disclosure;
FIG. 7 illustrates a block diagram of a signal receiving device according to an exemplary embodiment of the present disclosure;
FIG. 8 illustrates a block diagram of another signal receiving device according to an exemplary embodiment of the present disclosure; and
FIG. 9 illustrates a schematic structure diagram of a communication device according to an exemplary embodiment of the present disclosure.

### DETAILED DESCRIPTION

In order to make the object, technical solution and advantage of the present disclosure clearer, embodiments of the present disclosure will be described in further detail below in connection with the accompanying drawings.

Exemplary embodiments will be described herein in detail, examples of which are shown in the accompanying drawings. When the following description relates to the accompanying drawings, the same reference numerals in different accompanying drawings indicate the same or similar elements unless indicated otherwise. The implementations described in the following exemplary embodiments do not represent all the implementations consistent with the present disclosure. Rather, they are only examples of devices and methods consistent with some aspects of the present disclosure as detailed in the appended claims.

The terms used in the present disclosure are used solely for describing particular embodiments and are not intended to limit the present disclosure. The singular forms of "a", "an", "said", and "the" used in the present disclosure and the appended claims are also intended to include a plural form unless indicated otherwise. It is to be also understood that the term "and/or" as used herein refers to and include any or all possible combinations of one or more of the associated listed items.

It is to be understood that although the terms first, second, third, etc. may be used in the present disclosure to describe various information, such information should not be limited by these terms. These terms are used only to distinguish the same type of information from one another. For example, without departing from the scope of the present disclosure, first information may be referred to as second information, and similarly, second information may also be referred to as first information. Depending on the context, for example, the word "if" as used herein may be interpreted as "at the time of ......" or "when ......" or "in response to determining".

It is to be noted that the information (including but not limited to user device information, user personal information, etc.), data (including but not limited to data used for analysis, data stored, data displayed, etc.), and signal involved in the present disclosure are authorized by the user or sufficiently authorized by various parties, and the collection, use and processing of the relevant data are subject to relevant laws, regulations, and standards of relevant countries and regions.

In the following, an application scenario of the present disclosure is described.

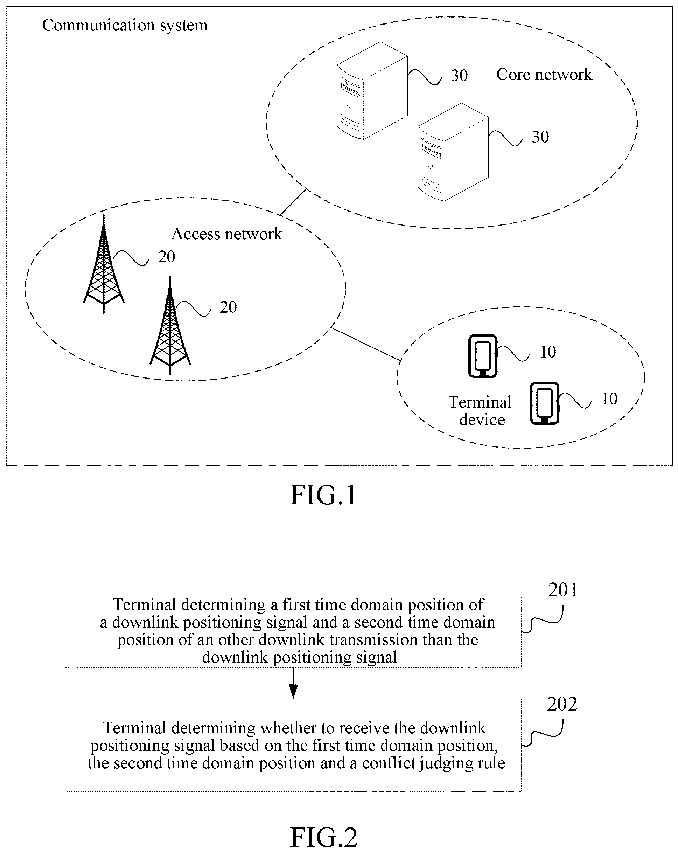

FIG. 1 illustrates a block diagram of a communication system according to an exemplary embodiment of the present disclosure, which may include a terminal 10 and a network device 20.

There are generally a plurality of terminals 10, and one or more terminals 10 may be distributed within a cell managed by each network device 20. The terminal 10 may include a variety of handheld devices, in-vehicle devices, wearable devices, computing devices, or other processing devices connected to wireless modems, which have wireless communication capabilities, and various forms of user equipment (UE), mobile station (MS), and the like. For ease of description, the above mentioned devices are collectively referred to as terminals in the embodiments of the present disclosure.

The access network device 20 is a device deployed in an access network to provide wireless communication function for the terminal 10. For ease of description, in the embodiments of the present disclosure, the above mentioned devices providing the wireless communication function for the terminal 10 are collectively referred to as network devices. A connection may be established between the network device 20 and the terminal 10 through an air interface, so that they may communicate through the connection, which includes interaction of signaling and data. There may be a plurality of network devices 20, and two neighbouring network devices 20 may communicate through a wired or wireless means. The terminal 10 may switch between different network devices 20, i.e., establish a connection with different network devices 20.

The access network device 20 may include various forms of macro base stations, micro base stations, relay stations, access points, transmission reception points (TRPs) and the like. In systems using different radio access technologies, the name of s device with a network device functionality may be different, for example, in a 5G NR (New Radio) system, it is called a gNodeB or a gNB. As the communication technology evolves, the name "network device" may change.

A core network device 30 is a device deployed in a core network, and the function of the core network device is mainly to provide user connectivity, manage users, and host services, thereby serving as a hosted network to provide an interface to an external network. For example, the core network device in the 5G NR system may include an access and mobility management function (AMF) network element, a user plane function (UPF) network element, and a session management function (SMF) network element. For example, the core network device 30 in an embodiment of the present disclosure may include a location management function network element. Optionally, the location management function network element includes a location server, and the location server may be implemented as any of: an LMF (Location Management Function), an E-SMLC (Enhanced Serving Mobile Location Centre), SUPL (Secure User Plane Location), and SUPL SLP (SUPL Location Platform).

The network device includes at least one of the core network device and the access network device.

FIG. 2 illustrates a flowchart of a signal receiving method according to an exemplary embodiment of the present disclosure, which may be exemplarily applied in the terminal as shown in FIG. 1, and the method includes at least some of the following.

In step 201, the terminal determines a first time domain position of a downlink positioning signal and a second time domain position of an other downlink transmission than the downlink positioning signal.

In an embodiment of the present disclosure, a network device may not only send a downlink positioning signal to a terminal, but also send an other downlink transmission than the downlink positioning signal to the terminal. The network device may configure, for the terminal, a first time domain position for transmitting the downlink positioning signal, and a second time domain position for transmitting the other downlink transmission. The terminal may determine the first time domain position of the downlink positioning signal and the second time domain position of the other downlink transmission than the downlink positioning signal.

In step 202, the terminal determines whether to receive the downlink positioning signal based on the first time domain position, the second time domain position and a conflict judging rule.

The conflict judging rule includes two cases, that is, there is a conflict between the first time domain position and the second time domain position, and there is no conflict between the first time domain position and the second time domain position. The conflict judging rule is used for the terminal to determine whether there is a conflict between the first time domain position and the second time domain position.

In some embodiments, in a case where the terminal is in an RRC (radio resource control) idle state, the terminal performs steps 201-202 to determine whether to receive the downlink positioning signal based on the conflict judging rule.

In an embodiment of the present disclosure, the terminal determines the first time domain position of the downlink positioning signal and the second time domain position of the other downlink transmission, and the relationship between the first time domain position and the second time domain position includes two cases, i.e., there is a conflict therebetween and there is no conflict therebetween. The terminal may determine, based on the conflict judging rule, whether the downlink positioning signal conflicts with the other downlink transmission or not.

It is to be noted that the steps performed by the network device may form a separate embodiment, and the steps performed by the terminal may also form a separate embodiment, which is not limited in the present disclosure.

In the solution provided by the embodiment of the present disclosure, the terminal determines whether to receive the downlink positioning signal based on the first time domain position of the downlink positioning signal, the second time domain position of the other downlink transmission than the downlink positioning signal and the conflict judging rule, which provides a way for the terminal to determine how to receive the downlink positioning signal and the other downlink transmission to ensure reliability of data transmission between the terminal and the network device

On the basis of the embodiment shown in FIG. 2, the terminal determines whether to receive the downlink positioning signal based on the conflict judging rule and a priority of the downlink positioning signal.

In some embodiments, in response to determining, based on the conflict judging rule, that the downlink positioning signal conflicts with the other downlink transmission, the terminal receives the downlink positioning signal when the priority of the downlink positioning signal is higher than a priority of the other downlink transmission. Alternatively, the terminal does not receive the downlink positioning signal when the priority of the downlink positioning signal is lower than the priority of the other downlink transmission.

The conflict judging rule is used to determine whether the downlink positioning signal conflicts with the other downlink transmission based on the first time domain position and the second time domain position, and when it is determined that the downlink positioning signal conflicts with the other downlink transmission, the terminal preferentially receives the downlink positioning signal if the priority of the downlink positioning signal is higher than the priority of the other downlink transmission, and the terminal preferentially receives the other downlink transmission if the priority of the downlink positioning signal is lower than the priority of the other downlink transmission.

It is to be noted that in the embodiment of the present disclosure, it illustrates as an example that the terminal preferentially receives the downlink positioning signal or the other downlink transmission when the downlink positioning signal conflicts with the other downlink transmission. In another embodiment, if the downlink positioning signal does not conflict with the other downlink transmission, the terminal receives the downlink positioning signal and the other downlink transmission.

On the basis of the embodiment shown in FIG. 2, for the conflict judging rule, it may include a plurality of ways to determine whether the downlink positioning signal conflicts with a downlink transmission, and the conflict judging rule includes at least one of the following cases.

In a first case, it is determined that the downlink positioning signal conflicts with the other downlink transmission in a case where there is an overlapping symbol between the first time domain position and the second time domain position.

In an embodiment of the present disclosure, if there is an overlapping symbol between the first time domain position and the second time domain position, it indicates that the downlink positioning signal and the other downlink transmissions share a common time domain position, and thus the terminal may not receive the downlink positioning signal and the other downlink transmission at the same time, and it is determined that the downlink positioning signal conflicts with the other downlink transmission.

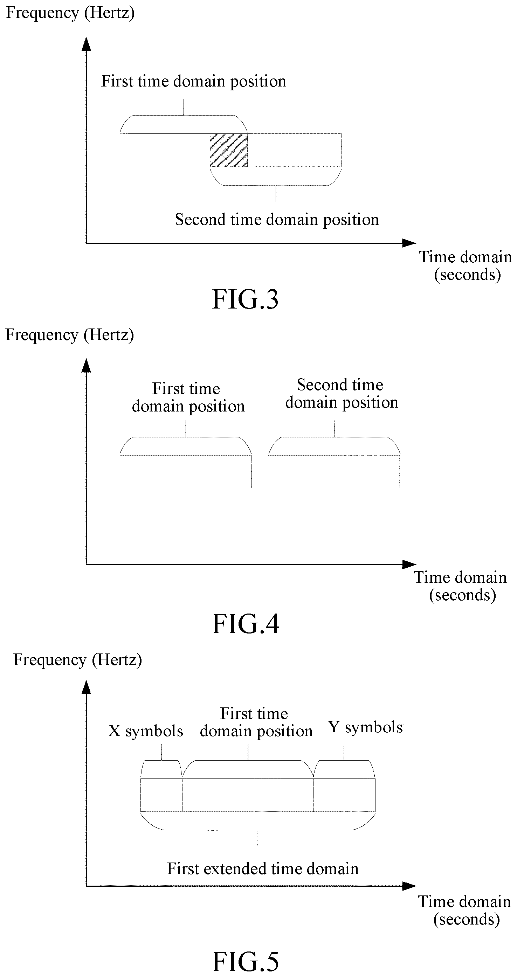

For example, as shown in FIG. 3, the left position in FIG. 3 is a first time domain position, and the right position in FIG. 3 is a second time domain position, and the shaded portions of the first time domain position and the second time domain position are an overlapping portion between the first time domain position and the second time domain position, which indicates that there is an overlapping symbol between the first time domain position and the second time domain position.

It is to be noted that in the embodiment of the present disclosure, it is illustrated as an example that there is an overlapping symbol between the first time domain position and the second time domain position. In another embodiment, it is determined that the downlink positioning signal does not conflict with the other downlink transmission if there is no overlapping symbol between the first time domain position and the second time domain position.

For example, as shown in FIG. 4, the lest position in FIG. 4 is a first time domain position, the right position in FIG. 4 is a second time domain position, and there is no overlapping portion between the first time domain position and the second time domain position, which indicates that the first time domain position and the second time domain position do not affect each other, and that there is no overlapping symbol between the first time domain position and the second time domain position.

In a second case, it is determined that the downlink positioning signal conflicts with the other downlink transmission in a case where there is an overlapping symbol between the first time domain position and a first extended time domain.

The first extended time domain includes the second time domain position, X symbols or time slots located before the second time domain position, and Y symbols or time slots located after the second time domain position, and X, Y are non-negative integers.

Optionally, X and Y are specified by a communication protocol, or are configured by the network device via an SIB (system information block), or are configured in some other way, which is not limited in the embodiments of the present disclosure.

The first extended time domain is a time domain obtained by extending the second time domain position. For example, the second time domain position includes a first starting position and a first ending position, and a position of X symbols or time slots located before the staring position is determined as a second starting position of the first extended time domain, and a position of Y symbols or time slots located after the first ending position is determined as a second ending position of the first extended time domain, and then the time domain between the second starting position and the second ending position is the first extended time domain.

For example, as shown in FIG. 5, there are X symbols before the second time domain position, there are Y symbols after the second time domain position, and a combination of the X symbols, the second time domain position, and the Y symbols is the first extended time domain.

Optionally, the first extended time domain includes the second time domain position, X symbols located before the second time domain position, and Y symbols located after the second time domain position, and X, Y are non-negative integers. Alternatively, the first extended time domain includes the second time domain position, X time slots located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers.

Optionally, the first extended time domain may be represented by a time window, which is not limited in the embodiments of the present disclosure.

In an embodiment of the present disclosure, if there is an overlapping symbol between the first time domain position and the first extended time domain, it indicates that the downlink positioning signal and the other downlink transmission share a common time domain position, and thus the terminal may not receive the downlink positioning signal and the other downlink transmission at the same time, and it is determined that the downlink positioning signal conflicts with the other downlink transmission.

It is to be noted that in the embodiment of the present disclosure, it is illustrated as an example that there is an overlapping symbol between the first time domain position and the first extended time domain. In another embodiment, if there is no overlapping symbol between the first time domain position and the first extended time domain, it is determined that the downlink positioning signal does not conflict with the other downlink transmission.

In some embodiments, the downlink positioning signal is located within an initial BWP (bandwidth part) or is located outside the initial BWP.

The initial BWP is a BWP configured by the network device for the terminal through system message broadcasting, or is a BWP stipulated by a protocol between the network device and the terminal, or is a BWP corresponding to an SSB (synchronization signal/PBCH block) received by the terminal from the network device, or is a BWP configured in other ways, which is not limited in the embodiments of the present disclosure.

Optionally, the initial BWP includes an active BWP, or includes a default BWP, or includes other types of BWPs, which is not limited in the embodiments of the present disclosure.

In an embodiment of the present disclosure, if the downlink positioning signal is located within the initial BWP, it may not consider a time duration for BWP switching, and if the downlink positioning signal is located outside the initial BWP, it may consider the time duration for BWP switching, and therefore, for the first extended frequency domain described above, there may be different values for X and Y when the downlink positioning signal is located in the initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, and the first number and the second number are non-negative integers. In the case where the downlink positioning signal is located inside the initial BWP, the first extended time domain includes the second time domain position, a third number of symbols or time slots located before the second time domain position, and a fourth number of symbols or time slots located after the second time domain position, and the third number and the fourth number are non-negative integers. The first number is not smaller than the third number, and the second number is not smaller than the fourth number.

Optionally, the first number and the second number may be the same or may also be different. The third number and the fourth number may be the same, or may also be different. Further, since the first number is not smaller than the third number, and the second number is not smaller than the fourth number, the first number, the second number, the third number, and the fourth number may be the same, or may be different.

For example, in a case where the downlink positioning signal is located outside the initial BWP, the first extended time domain includes the second time domain position, five symbols located before the second time domain position, and six symbols located after the second time domain position, and in a case where the downlink positioning signal is located within the initial BWP, the first extended time domain includes the second time domain position, four symbols located before the second time domain position, and four symbols located after the second time domain position.

In the solution provided by the embodiment of the present disclosure, the terminal determines whether to receive the downlink positioning signal based on the conflict judging rule, so as to ensure the reception of data in a case where the downlink positioning signal conflicts with the other downlink transmission than the downlink positioning signal, thereby improving the reliability of the communication between the terminal and the network device.

The above embodiments illustrate the conflict judging rule with respect to the other downlink transmission, and as for the other downlink transmission, it may include the downlink transmission corresponding to a servicing cell.

In some embodiments, the other downlink transmission includes a downlink channel and/or a downlink signal corresponding to the servicing cell.

The downlink channel and/or downlink signal corresponding to the servicing cell includes:
(1) the downlink channel corresponding to the servicing cell;
(2) the downlink signal corresponding to the servicing cell; or
(3) the downlink channel and the downlink signal corresponding to the servicing cell.

Optionally, the downlink channel and/or downlink signal corresponding to the servicing cell includes at least one of:
(1) an SSB of the servicing cell;
(2) an SIB of the servicing cell.
(3) a CSI-RS (channel state information reference signal) for TRS (tracking reference signal).
(4) PDCCH (physical downlink control channel) in a CSS (common search space) associated with CORESET#0 (search space set 0).

In some embodiments, the PDCCH includes a PDCCH corresponding to at least one of SIB, paging, RA (random access), PEI (paging early indication).

In an embodiment of the present disclosure, when the other downlink transmission includes the downlink signal and/or downlink signal corresponding to the servicing cell, the priority of the downlink positioning signal is lower than the priority of the other downlink transmission. That is, the priority of the downlink positioning signal is lower than the priority of the downlink channel and/or downlink signal corresponding to the servicing cell.

An example in which the other downlink transmission includes an other downlink transmission transmitted by the serving cell is described below.

In an embodiment of the present disclosure, the terminal obtains the first time domain position of the downlink positioning signal and the second time domain position of the downlink channel and/or the downlink signal corresponding to the servicing cell, and the priority of the downlink positioning signal is lower than the priority of the downlink channel and/or the downlink signal corresponding to the servicing cell, and therefore, for the terminal, it may determine, based on the first time domain position, the second time domain position and the conflict judging rule, whether to receive the downlink positioning signal. The terminal determining whether to receive the downlink positioning signal may include at least one of the following cases.

In a first case, in a case where there is an overlapping symbol between the first time domain position and the second time domain position, it is determined that the downlink positioning signal conflicts with the downlink channel and/or the downlink signal corresponding to the servicing cell, and the downlink channel and/or the downlink signal corresponding to the servicing cell is received.

In an embodiment of the present disclosure, if there is an overlapping symbol between the first time domain position and the second time domain position, it indicates that the downlink positioning signal and the downlink channel and/or the downlink signal corresponding to the servicing cell share a common time domain position, and thus the terminal may not receive the downlink positioning signal and the downlink channel and/or the downlink signal corresponding to the servicing cell at the same time. As the priority of the downlink positioning signal is lower than that of the downlink channel and/or the downlink signal corresponding to the servicing cell, the terminal receives the downlink channel and/or the downlink signal corresponding to the servicing cell.

It is to be noted that in the embodiment of the present disclosure, it is illustrated as an example that there is an overlapping symbol between the first time domain position and the second time domain position. In another embodiment, if there is no overlapping symbol between the first time domain position and the second time domain position, it is determined that the downlink positioning signal does not conflict with the downlink channel and/or the downlink signal corresponding to the servicing cell, and the terminal may receive the downlink positioning signal and the downlink channel and/or downlink signal corresponding to the servicing cell.

In a second case, in a case where there is an overlapping symbol between the first time domain position and a first extended time domain, it is determined that the downlink positioning signal conflicts with the downlink channel and/or the downlink signal corresponding to the servicing cell, and the downlink channel and/or the downlink signal corresponding to the servicing cell is received.

The first extended time domain includes the second time domain position, X symbols or time slots located before the second time domain position, and Y symbols or time slots located after the second time domain position, and X, Y are non-negative integers.

Optionally, X and Y are specified by a communication protocol, or are configured by the network device via an SIB, or are configured in some other way, which is not limited in the embodiments of the present disclosure.

The first extended time domain is a time domain obtained by extending the second time domain position. For example, the second time domain position includes a first starting position and a first ending position, a position of X symbols or time slots located before the staring position is determined as a second starting position of the first extended time domain, and a position of Y symbols or time slots located after the first ending position is determined as a second ending position of the first extended time domain, and then the time domain between the second starting position and the second ending position is the first extended time domain.

Optionally, the first extended time domain includes the second time domain position, X symbols located before the second time domain position, and Y symbols located after the second time domain position, and X, Y are non-negative integers. Alternatively, the first extended time domain includes the second time domain position, X time slots located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers.

Optionally, the first extended time domain may be represented by a time window, which is not limited in the embodiments of the present disclosure.

In an embodiment of the present disclosure, if there is an overlapping symbol between the first time domain position and the first extended time domain, it indicates that the downlink positioning signal and the downlink channel and/or downlink signal corresponding to the servicing cell share a common time domain position, and thus the terminal may not receive the downlink positioning signal and the downlink channel and/or downlink signal corresponding to the servicing cell at the same time. As the priority of the downlink positioning signal is lower than that of the downlink channel and/or downlink signal corresponding to the servicing cell, the terminal receives the downlink channel and/or downlink signal corresponding to the servicing cell.

It is to be noted that in the embodiment of the present disclosure, it is illustrated as an example that there is an overlapping symbol between the first time domain position and the first extended time domain. In another embodiment, if there is no overlapping symbol between the first time domain position and the first extended time domain, it is determined that the downlink positioning signal does not conflict with the downlink channel and/or the downlink signal corresponding to the servicing cell, and the terminal may receive the downlink positioning signal and the downlink channel and/or downlink signal corresponding to the servicing cell.

In some embodiments, the downlink positioning signal is located within an initial BWP or is located outside the initial BWP.

The initial BWP is a BWP configured by the network device for the terminal through system message broadcasting, or is a BWP stipulated by a protocol between the network device and the terminal, or is a BWP corresponding to an SSB received by the terminal from the network device, or is a BWP configured in other ways, which is not limited in the embodiments of the present disclosure.

In an embodiment of the present disclosure, if the downlink positioning signal is located within the initial BWP, it may not consider a time duration for BWP switching, and if the downlink positioning signal is located outside the initial BWP, it may consider the time duration for BWP switching, and therefore, for the first extended frequency domain described above, there may be different values for X and Y when the downlink positioning signal is located in the initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, and the first number and the second number are non-negative integers. In a case where the downlink positioning signal is located inside the initial BWP, the first extended time domain includes the second time domain position, a third number of symbols or time slots located before the second time domain position, and a fourth number of symbols or time slots located after the second time domain position, and the third number and the fourth number are non-negative integers. The first number is not smaller than the third number, and the second number is not smaller than the fourth number.

Optionally, the first number and the second number may be the same or may also be different. The third number and the fourth number may be the same, or may also be different. Further, since the first number is not smaller than the third number, and the second number is not smaller than the fourth number, the first number, the second number, the third number, and the fourth number may be the same, or may be different.

In the solution provided by the embodiment of the present disclosure, the terminal determines whether to receive the downlink positioning signal based on the conflict judging rule, so as to ensure the reception of data in a case where the downlink positioning signal conflicts with the downlink channel and/or downlink signal corresponding to the servicing cell other than the downlink positioning signal, thereby improving the reliability of the communication between the terminal and the network device.

The above embodiments illustrate the conflict judging rule with respect to the other downlink transmission, and as for the other downlink transmission, it may include the downlink transmission corresponding to a neighbouring cell.

In some embodiments, the other downlink transmission includes a downlink channel and/or a downlink signal corresponding to the neighbouring cell.

The downlink channel and/or the downlink signal corresponding to the neighbouring cell includes any of:
(1) the downlink channel corresponding to the neighbouring cell;
(2) the downlink signal corresponding to the neighbouring cell; and
(3) the downlink channel and the downlink signal corresponding to the neighbouring cell.

Optionally, the downlink channel and/or the downlink signal corresponding to the neighbouring cell includes at least one of:
(1) an SSB of the neighbouring cell;
(2) an SIB of the neighbouring cell; or
(3) a PDCCH in CSS associated with CORESET#0.

Optionally, the PDCCH includes a PDCCH corresponding to the SIB.

In some embodiments, the neighbouring cell includes at least one of an intra-frequency neighbouring cell having a same frequency as a serving cell and an inter-frequency neighbouring cell having a different frequency from the serving cell.

That is, the neighbouring cell includes any of the following cases:
(1) the neighbouring cell includes the intra-frequency neighbouring cell;
(2) the neighbouring cell includes the inter-frequency neighbouring cell; and
(3) the neighbour cell includes the intra-frequency neighbouring cell and the inter-frequency neighbouring cell.

In some embodiments, the downlink transmission of the neighbouring cell corresponds to the second time domain position, and the second time domain position is determined according to SMTC (SSB-based measurement timing configuration).

In an embodiment of the present disclosure, the SMTC is a periodic duration, that is, the second time domain position to which the downlink transmission of the neighbouring cell corresponds is a periodic duration indicated by the SMTC, and the terminal may measure the SSB on a corresponding carrier frequency within the periodic duration.

In an embodiment of the present disclosure, the neighbouring cell includes an intra-frequency neighbouring cell or an inter-frequency neighbouring cell. In a case where the neighbouring cell includes the intra-frequency neighbouring cell, or the inter-frequency neighbouring cell included in the neighbouring cell is a first inter-frequency neighbouring cell, the priority of the downlink positioning signal is lower than that of the other downlink transmission which includes the downlink signal and/or the downlink signal corresponding to the neighbouring cell, i.e., the priority of the downlink positioning signal is lower than the priority of the downlink channel and/or the downlink signal corresponding to the neighbouring cell.

Hereinafter, it is explained what the conflict judging rule is in a case where the neighbouring cell includes the intra-frequency neighbouring cell or the first inter-frequency neighbouring cell, respectively.

If the neighbouring cell includes the intra-frequency neighbouring cell, the terminal obtains the first time domain position of the downlink positioning signal and the second time domain position of the downlink channel and/or downlink signal corresponding to the intra-frequency neighbouring cell, and the priority of the downlink positioning signal is lower than the priority of the downlink channel and/or downlink signal corresponding to the intra-frequency neighbouring cell, therefore for the terminal, it may determine whether to receive the downlink positioning signal based on the first time domain position, the second time domain position and the conflict judging rule. The terminal determining whether to receive the downlink positioning signal may include at least one of the following cases.

In a first case, in a case where there is an overlapping symbol between the first time domain position and the second time domain position, it is determined that the downlink positioning signal conflicts with the downlink channel and/or the downlink signal corresponding to the intra-frequency neighbouring cell, and the downlink channel and/or the downlink signal corresponding to the intra-frequency neighbouring cell is received.

In an embodiment of the present disclosure, if there is an overlapping symbol between the first time domain position and the second time domain position, it indicates that the downlink positioning signal and the downlink channel and/or the downlink signal corresponding to the intra-frequency neighbouring cell share a common time domain position, and thus the terminal may not receive the downlink positioning signal and the downlink channel and/or the downlink signal corresponding to the intra-frequency neighbouring cell at the same time. As the priority of the downlink positioning signal is lower than that of the downlink channel and/or the downlink signal corresponding to the intra-frequency neighbouring cell, the terminal receives the downlink channel and/or the downlink signal corresponding to the intra-frequency neighbouring cell.

It is to be noted that in the embodiment of the present disclosure, it is illustrated as an example that there is an overlapping symbol between the first time domain position and the second time domain position. In another embodiment, if there is no overlapping symbol between the first time domain position and the second time domain position, it is determined that the downlink positioning signal does not conflict with the downlink channel and/or the downlink signal corresponding to the intra-frequency neighbouring cell, and the terminal may receive the downlink positioning signal and the downlink channel and/or downlink signal corresponding to the intra-frequency neighbouring cell.

In a second case, in a case where there is an overlapping symbol between the first time domain position and a first extended time domain, it is determined that the downlink positioning signal conflicts with the downlink channel and/or the downlink signal corresponding to the intra-frequency neighbouring cell, and the downlink channel and/or the downlink signal corresponding to the intra-frequency neighbouring cell is received.

The first extended time domain includes the second time domain position, X symbols or time slots located before the second time domain position, and Y symbols or time slots located after the second time domain position, and X, Y are non-negative integers.

Optionally, X and Y are specified by a communication protocol, or are configured by the network device via an SIB, or are configured in some other way, which is not limited in the embodiments of the present disclosure.

The first extended time domain is a time domain obtained by extending the second time domain position. For example, the second time domain position includes a first starting position and a first ending position, a position of X symbols or time slots located before the staring position is determined as a second starting position of the first extended time domain, and a position of Y symbols or time slots located after the first ending position is determined as a second ending position of the first extended time domain, and then the time domain between the second starting position and the second ending position is the first extended time domain.

Optionally, the first extended time domain includes the second time domain position, X symbols located before the second time domain position, and Y symbols located after the second time domain position, and X, Y are non-negative integers. Alternatively, the first extended time domain includes the second time domain position, X time slots located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers.

Optionally, the first extended time domain may be represented by a time window, which is not limited in the embodiments of the present disclosure.

In an embodiment of the present disclosure, if there is an overlapping symbol between the first time domain position and the first extended time domain, it indicates that the downlink positioning signal and the downlink channel and/or downlink signal corresponding to the intra-frequency neighbouring cell share a common time domain position, and thus the terminal may not receive the downlink positioning signal and the downlink channel and/or downlink signal corresponding to the intra-frequency neighbouring cell at the same time. As the priority of the downlink positioning signal is lower than that of the downlink channel and/or downlink signal corresponding to the intra-frequency neighbouring cell, the terminal receives the downlink channel and/or downlink signal corresponding to the intra-frequency neighbouring cell.

It is to be noted that in the embodiment of the present disclosure, it is illustrated as an example that there is an overlapping symbol between the first time domain position and the first extended time domain. In another embodiment, if there is no overlapping symbol between the first time domain position and the first extended time domain, it is determined that the downlink positioning signal does not conflict with the downlink channel and/or the downlink signal corresponding to the intra-frequency neighbouring cell, and the terminal may receive the downlink positioning signal and the downlink channel and/or downlink signal corresponding to the intra-frequency neighbouring cell.

In some embodiments, the downlink positioning signal is located within an initial BWP or is located outside the initial BWP.

The initial BWP is a BWP configured by the network device for the terminal through system message broadcasting, or is a BWP stipulated by a protocol between the network device and the terminal, or is a BWP corresponding to an SSB received by the terminal from the network device, or is a BWP configured in other ways, which is not limited in the embodiments of the present disclosure.

In an embodiment of the present disclosure, if the downlink positioning signal is located within the initial BWP, it may not consider a time duration for BWP switching, and if the downlink positioning signal is located outside the initial BWP, it may consider the time duration for BWP switching, and therefore, for the first extended frequency domain described above, there may be different values for X and Y when the downlink positioning signal is located in the initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, X is the first number, Y is the second number, and the first number and the second number are non-negative integers. In a case where the downlink positioning signal is located inside the initial BWP, the first extended time domain includes the second time domain position, a third number of symbols or time slots located before the second time domain position, and a fourth number of symbols or time slots located after the second time domain position, X is the third number, Y is the fourth number, and the third number and the fourth number are non-negative integers. The first number is not smaller than the third number, and the second number is not smaller than the fourth number.

Optionally, the first number and the second number may be the same or may also be different. The third number and the fourth number may be the same, or may also be different. Further, since the first number is not smaller than the third number, and the second number is not smaller than the fourth number, the first number, the second number, the third number, and the fourth number may be the same, or may be different.

In the solution provided by the embodiment of the present disclosure, the terminal determines whether to receive the downlink positioning signal based on the conflict judging rule, so as to ensure the reception of data in a case where the downlink positioning signal conflicts with the downlink channel and/or downlink signal corresponding to the intra-frequency neighbouring cell other than the downlink positioning signal, thereby improving the reliability of the communication between the terminal and the network device.

If the inter-frequency neighbouring cell included in the neighbouring cell includes a first inter-frequency neighbouring cell, the priority of a frequency corresponding to the first inter-frequency neighbouring cell is higher than the priority of a frequency corresponding to the serving cell.

Optionally, since the priority of the frequency corresponding to the first inter-frequency neighbouring cell is higher than the priority of the frequency corresponding to the serving cell, the terminal may preferentially select the first inter-frequency neighbouring cell, and may measure the first inter-frequency neighbouring cell. In addition, if the signal quality of the first inter-frequency neighbouring cell measured by the terminal is higher than the signal quality of the servicing cell, it means that the communication quality of the terminal through the first inter-frequency neighbouring cell is higher than that of the servicing cell, and the terminal may reselect the first inter-frequency neighbouring cell.

In an embodiment of the present disclosure, the terminal obtains the first time domain position of the downlink positioning signal and the second time domain position of the downlink channel and/or the downlink signal corresponding to the first inter-frequency neighbouring cell, and the priority of the downlink positioning signal is lower than the priority of the downlink channel and/or the downlink signal corresponding to the first inter-frequency neighbouring cell, and therefore, for the terminal, it may determine, based on the first time domain position, the second time domain position and the conflict judging rule, whether to receive the downlink positioning signal. The terminal determining whether to receive the downlink positioning signal may include at least one of the following cases.

In a first case, in a case where there is an overlapping symbol between the first time domain position and the second time domain position, it is determined that the downlink positioning signal conflicts with the downlink channel and/or the downlink signal corresponding to the first inter-frequency neighbouring cell, and the downlink channel and/or the downlink signal corresponding to the first inter-frequency neighbouring cell is received.

In an embodiment of the present disclosure, if there is an overlapping symbol between the first time domain position and the second time domain position, it indicates that the downlink positioning signal and the downlink channel and/or the downlink signal corresponding to the first inter-frequency neighbouring cell share a common time domain position, and thus the terminal may not receive the downlink positioning signal and the downlink channel and/or the downlink signal corresponding to the first inter-frequency neighbouring cell at the same time. As the priority of the downlink positioning signal is lower than that of the downlink channel and/or the downlink signal corresponding to the first inter-frequency neighbouring cell, the terminal receives the downlink channel and/or the downlink signal corresponding to the first inter-frequency neighbouring cell.

It is to be noted that in the embodiment of the present disclosure, it is illustrated as an example that there is an overlapping symbol between the first time domain position and the second time domain position. In another embodiment, if there is no overlapping symbol between the first time domain position and the second time domain position, it is determined that the downlink positioning signal does not conflict with the downlink channel and/or the downlink signal corresponding to the first inter-frequency neighbouring cell, and the terminal may receive the downlink positioning signal and the downlink channel and/or downlink signal corresponding to the first inter-frequency neighbouring cell.

In a second case, in a case where there is an overlapping symbol between the first time domain position and a first extended time domain, it is determined that the downlink positioning signal conflicts with the downlink channel and/or the downlink signal corresponding to the first inter-frequency neighbouring cell, and the downlink channel and/or the downlink signal corresponding to the first inter-frequency neighbouring cell is received.

The first extended time domain includes the second time domain position, X symbols or time slots located before the second time domain position, and Y symbols or time slots located after the second time domain position, and X, Y are non-negative integers.

Optionally, X and Y are specified by a communication protocol, or are configured by the network device via an SIB, or are configured in some other way, which is not limited in the embodiments of the present disclosure.

The first extended time domain is a time domain obtained by extending the second time domain position. For example, the second time domain position includes a first starting position and a first ending position, a position of X symbols or time slots located before the staring position is determined as a second starting position of the first extended time domain, and a position of Y symbols or time slots located after the first ending position is determined as a second ending position of the first extended time domain, and then the time domain between the second starting position and the second ending position is the first extended time domain.

Optionally, the first extended time domain includes the second time domain position, X symbols located before the second time domain position, and Y symbols located after the second time domain position, and X, Y are non-negative integers. Alternatively, the first extended time domain includes the second time domain position, X time slots located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers.

Optionally, the first extended time domain may be represented by a time window, which is not limited in the embodiments of the present disclosure.

In an embodiment of the present disclosure, if there is an overlapping symbol between the first time domain position and the first extended time domain, it indicates that the downlink positioning signal and the downlink channel and/or downlink signal corresponding to the first inter-frequency neighbouring cell share a common time domain position, and thus the terminal may not receive the downlink positioning signal and the downlink channel and/or downlink signal corresponding to the first inter-frequency neighbouring cell at the same time. As the priority of the downlink positioning signal is lower than that of the downlink channel and/or downlink signal corresponding to the first inter-frequency neighbouring cell, the terminal receives the downlink channel and/or downlink signal corresponding to the first inter-frequency neighbouring cell.

It is to be noted that in the embodiment of the present disclosure, it is illustrated as an example that there is an overlapping symbol between the first time domain position and the first extended time domain. In another embodiment, if there is no overlapping symbol between the first time domain position and the first extended time domain, it is determined that the downlink positioning signal does not conflict with the downlink channel and/or the downlink signal corresponding to the first inter-frequency neighbouring cell, and the terminal may receive the downlink positioning signal and the downlink channel and/or downlink signal corresponding to the first inter-frequency neighbouring cell.

In some embodiments, the downlink positioning signal is located within an initial BWP or is located outside the initial BWP.

The initial BWP is a BWP configured by the network device for the terminal through system message broadcasting, or is a BWP stipulated by a protocol between the network device and the terminal, or is a BWP corresponding to an SSB received by the terminal from the network device, or is a BWP configured in other ways, which is not limited in the embodiments of the present disclosure.

In an embodiment of the present disclosure, if the downlink positioning signal is located within the initial BWP, it may not consider a time duration for BWP switching, and if the downlink positioning signal is located outside the initial BWP, it may consider the time duration for BWP switching, and therefore, for the first extended frequency domain described above, there may be different values for X and Y when the downlink positioning signal is located in the initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, and the first number and the second number are non-negative integers. In a case where the downlink positioning signal is located inside the initial BWP, the first extended time domain includes the second time domain position, a third number of symbols or time slots located before the second time domain position, and a fourth number of symbols or time slots located after the second time domain position, and the third number and the fourth number are non-negative integers. The first number is not smaller than the third number, and the second number is not smaller than the fourth number.

Optionally, the first number and the second number may be the same or may also be different. The third number and the fourth number may be the same, or may also be different. Further, since the first number is not smaller than the third number, and the second number is not smaller than the fourth number, the first number, the second number, the third number, and the fourth number may be the same, or may be different.

In the solution provided by the embodiment of the present disclosure, the terminal determines whether to receive the downlink positioning signal based on the conflict judging rule, so as to ensure the reception of data in a case where the downlink positioning signal conflicts with the downlink channel and/or downlink signal corresponding to the first inter-frequency neighbouring cell other than the downlink positioning signal, thereby improving the reliability of the communication between the terminal and the network device.

It is to be noted that in the above embodiment, it is illustrated as an example that the inter-frequency neighbouring cell included in the neighbouring cell includes the first inter-frequency neighbouring cell, and the priority of the frequency corresponding to the first inter-frequency neighbouring cell is higher than the priority of the frequency corresponding to the servicing cell. In another embodiment, the inter-frequency neighbouring cell further includes a second inter-frequency neighbouring cell, in which case the priority of the downlink positioning signal is higher than the priority of the other downlink transmission of the second inter-frequency neighbouring cell, and the priority of the frequency corresponding to the second inter-frequency neighbouring cell is lower than the priority of the frequency corresponding to the servicing cell.

Optionally, the second inter-frequency neighbouring cell is measured in a case where the signal strength of the servicing cell is not greater than a preset threshold.

The preset threshold is configured by the network device, or stipulated by a communication protocol, or set by other means, which is not limited in the embodiments of the present disclosure.

In an embodiment of the present disclosure, if the signal strength of the servicing cell is not greater than the preset threshold, it indicates that the signal strength of the servicing cell may not meet a communication requirement, and then the terminal may measure the signal strength of the second inter-frequency neighbouring cell, so that the terminal searches for a neighbouring cell which signal strength meets the requirement, and then reselect the neighbouring cell which meets the signal strength.

It is to be noted that in the embodiment of the present disclosure, it is illustrated as an example that the signal strength of the servicing cell is not greater than the preset threshold. In another embodiment, in a case where the signal strength of the servicing cell is greater than the preset threshold, the terminal does not measure the second inter-frequency neighbouring cell.

In an embodiment of the present disclosure, if the signal strength of the servicing cell is greater than the preset threshold, and the priority of the second inter-frequency neighbouring cell is lower than the priority of the servicing cell, it indicates that the terminal may communicate based on the servicing cell at this time, and may not measure the second inter-frequency neighbouring cell.

In an embodiment of the present disclosure, the terminal obtains the first time domain position of the downlink positioning signal and the second time domain position of the downlink channel and/or the downlink signal corresponding to the second inter-frequency neighbouring cell, and the priority of the downlink positioning signal is higher than the priority of the downlink channel and/or the downlink signal corresponding to the second inter-frequency neighbouring cell, and therefore, for the terminal, it may determine, based on the first time domain position, the second time domain position and the conflict judging rule, whether to receive the downlink positioning signal. The terminal determining whether to receive the downlink positioning signal may include at least one of the following cases.

In a first case, in a case where there is an overlapping symbol between the first time domain position and the second time domain position, it is determined that the downlink positioning signal conflicts with the downlink channel and/or the downlink signal corresponding to the second inter-frequency neighbouring cell, and the downlink positioning signal is received.

In an embodiment of the present disclosure, if there is an overlapping symbol between the first time domain position and the second time domain position, it indicates that the downlink positioning signal and the downlink channel and/or the downlink signal corresponding to the second inter-frequency neighbouring cell share a common time domain position, and thus the terminal may not receive the downlink positioning signal and the downlink channel and/or the downlink signal corresponding to the second inter-frequency neighbouring cell at the same time. As the priority of the downlink positioning signal is higher than that of the downlink channel and/or the downlink signal corresponding to the second inter-frequency neighbouring cell, the terminal receives the downlink positioning signal.

It is to be noted that in the embodiment of the present disclosure, it is illustrated as an example that there is an overlapping symbol between the first time domain position and the second time domain position. In another embodiment, if there is no overlapping symbol between the first time domain position and the second time domain position, it is determined that the downlink positioning signal does not conflict with the downlink channel and/or the downlink signal corresponding to the second inter-frequency neighbouring cell, and the terminal may receive the downlink positioning signal and the downlink channel and/or downlink signal corresponding to the second inter-frequency neighbouring cell.

In a second case, in a case where there is an overlapping symbol between the first time domain position and a first extended time domain, it is determined that the downlink positioning signal conflicts with the downlink channel and/or the downlink signal corresponding to the second inter-frequency neighbouring cell, and the downlink positioning signal is received.

The first extended time domain includes the second time domain position, X symbols or time slots located before the second time domain position, and Y symbols or time slots located after the second time domain position, and X, Y are non-negative integers.

Optionally, X and Y are specified by a communication protocol, or are configured by the network device via an SIB, or are configured in some other way, which is not limited in the embodiments of the present disclosure.

The first extended time domain is a time domain obtained by extending the second time domain position. For example, the second time domain position includes a first starting position and a first ending position, a position of X symbols or time slots located before the staring position is determined as a second starting position of the first extended time domain, and a position of Y symbols or time slots located after the first ending position is determined as a second ending position of the first extended time domain, and then the time domain between the second starting position and the second ending position is the first extended time domain.

Optionally, the first extended time domain includes the second time domain position, X symbols located before the second time domain position, and Y symbols located after the second time domain position, and X, Y are non-negative integers. Alternatively, the first extended time domain includes the second time domain position, X time slots located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers. Alternatively, the first extended time domain includes the second time domain position, X symbols located before the second time domain position, and Y time slots located after the second time domain position, and X, Y are non-negative integers.

Optionally, the first extended time domain may be represented by a time window, which is not limited in the embodiments of the present disclosure.

In an embodiment of the present disclosure, if there is an overlapping symbol between the first time domain position and the first extended time domain, it indicates that the downlink positioning signal and the downlink channel and/or downlink signal corresponding to the second inter-frequency neighbouring cell share a common time domain position, and thus the terminal may not receive the downlink positioning signal and the downlink channel and/or downlink signal corresponding to the second inter-frequency neighbouring cell at the same time. As the priority of the downlink positioning signal is higher than that of the downlink channel and/or downlink signal corresponding to the second inter-frequency neighbouring cell, the terminal receives the downlink positioning signal.

It is to be noted that in the embodiment of the present disclosure, it is illustrated as an example that there is an overlapping symbol between the first time domain position and the first extended time domain. In another embodiment, if there is no overlapping symbol between the first time domain position and the first extended time domain, it is determined that the downlink positioning signal does not conflict with the downlink channel and/or the downlink signal corresponding to the second inter-frequency neighbouring cell, and the terminal may receive the downlink positioning signal and the downlink channel and/or downlink signal corresponding to the second inter-frequency neighbouring cell.

In some embodiments, the downlink positioning signal is located within an initial BWP or is located outside the initial BWP.

The initial BWP is a BWP configured by the network device for the terminal through system message broadcasting, or is a BWP stipulated by a protocol between the network device and the terminal, or is a BWP corresponding to an SSB received by the terminal from the network device, or is a BWP configured in other ways, which is not limited in the embodiments of the present disclosure.

In an embodiment of the present disclosure, if the downlink positioning signal is located within the initial BWP, it may not consider a time duration for BWP switching, and if the downlink positioning signal is located outside the initial BWP, it may consider the time duration for BWP switching, and therefore, for the first extended frequency domain described above, there may be different values for X and Y when the downlink positioning signal is located in the initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, and the first number and the second number are non-negative integers. In a case where the downlink positioning signal is located inside the initial BWP, the first extended time domain includes the second time domain position, a third number of symbols or time slots located before the second time domain position, and a fourth number of symbols or time slots located after the second time domain position, and the third number and the fourth number are non-negative integers. The first number is not smaller than the third number, and the second number is not smaller than the fourth number.

Optionally, the first number and the second number may be the same or may also be different. The third number and the fourth number may be the same, or may also be different. Further, since the first number is not smaller than the third number, and the second number is not smaller than the fourth number, the first number, the second number, the third number, and the fourth number may be the same, or may be different.

In the solution provided by the embodiment of the present disclosure, the terminal determines whether to receive the downlink positioning signal based on the conflict judging rule, so as to ensure the reception of data in a case where the downlink positioning signal conflicts with the downlink channel and/or downlink signal corresponding to the second inter-frequency neighbouring cell other than the downlink positioning signal, thereby improving the reliability of the communication between the terminal and the network device.

The downlink positioning signal involved in the present disclosure have a lower priority than the priority of an other downlink transmission including a plurality of types of transmissions.

In some embodiments, the other downlink transmission includes at least one of:
an other downlink transmission transmitted by the serving cell;
an other downlink transmission transmitted by the intra-frequency neighbouring cell; or
an other downlink transmission transmitted by the first inter-frequency neighbouring cell.

That is, the other downlink transmission includes the other downlink transmission transmitted by the serving cell, or the other downlink transmission includes the other downlink transmission transmitted by the serving cell and the other downlink transmission transmitted by the intra-frequency neighbouring cell. Alternatively, the other downlink transmission includes the other downlink transmission transmitted by the intra-frequency neighbouring cell and the other downlink transmission transmitted by the first inter-frequency neighbouring cell. Alternatively, the other downlink transmission includes the other downlink transmission transmitted by the serving cell and the other downlink transmission transmitted by the first inter-frequency neighbouring cell. Alternatively, the other downlink transmission includes the other downlink transmission transmitted by the servicing cell, the other downlink transmission transmitted by the intra-frequency neighbouring cell and the other downlink transmission transmitted by the first inter-frequency neighbouring cell.

The other downlink transmission in the embodiment of the present disclosure is similar to the downlink transmission in the embodiments described above, which is not repeated herein.

In some other embodiments, if the priority of the downlink positioning signal is higher than the priority of the other downlink transmission, the other downlink transmission includes the other downlink transmission transmitted by the second inter-frequency neighbouring cell.

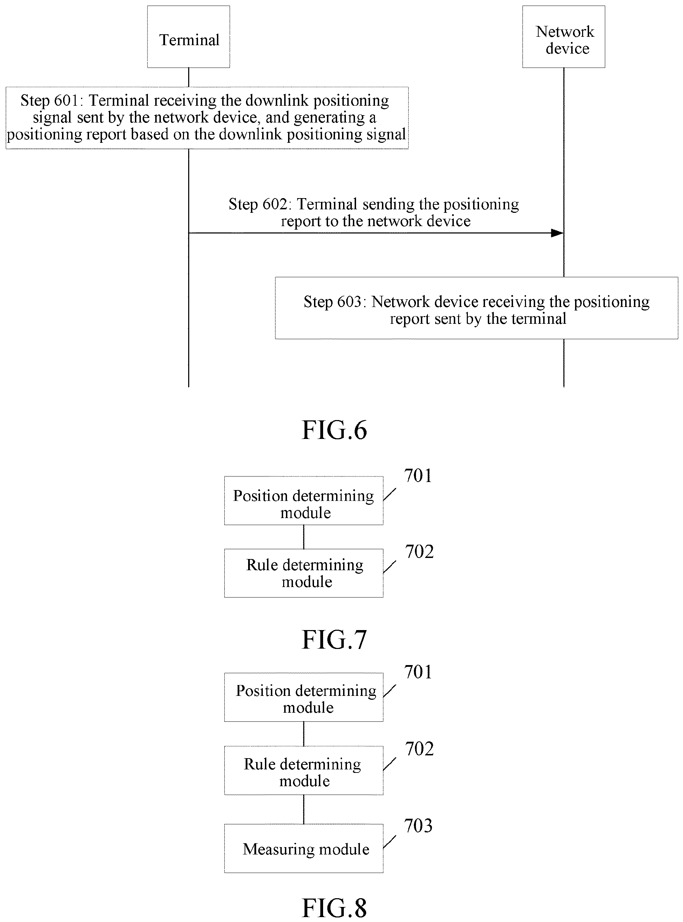

On the basis of the above embodiment, the terminal may determine whether to receive the downlink positioning signal based on the conflict judging rule, and in a case where the terminal may receive the downlink positioning signal, as shown in FIG. 6, the method further includes the following steps.

In step 601, the terminal receives the downlink positioning signal sent by the network device, and generates a positioning report based on the downlink positioning signal.

In an embodiment of the present disclosure, after determining based on the conflict judging rule that it can receive the downlink positioning signal, the terminal may receive the downlink positioning signal, and then generate the positioning report based on the received downlink positioning signal.

In some embodiments, the positioning report includes at least one of:
(1) a downlink RSRP (reference signal receiving power) of the downlink positioning signal;
(2) an arrival time difference of the downlink positioning signal;
(3) a terminal receiving and transmitting time difference; or
(4) a carrier phase.

In step 602, the terminal sends the positioning report to the network device.

In step 603, the network device receives the positioning report sent by the terminal.

In an embodiment of the present disclosure, the terminal sends the positioning report to the network device, and the network device receives the positioning report sent by the terminal, and then locates the terminal according to the received positioning report to determine the position where the terminal is located.

Optionally, the network device includes LMF (location management function), the terminal sends the positioning report to the LMF, the LMF receives the positioning report sent by the terminal, and thus locates the terminal according to the positioning report to determine the location of the terminal.

It is to be noted that in an embodiment of the present disclosure, the steps performed by the terminal may form a separate embodiment, and the steps performed by the network device may also form a separate embodiment, which is not limited in the embodiments of the present disclosure.

In the solution provided by the embodiment of the present disclosure, the terminal, in the case of determining to receive a downlink positioning signal, generates a positioning report based on the downlink positioning signal, and sends the positioning report to the network device, so that the network device locates the terminal based on the received positioning report, which improves the stability of locating the terminal while guaranteeing the reliability of the communication.

It is to be noted that the above embodiment may be divided into new embodiments or combined with an other embodiment to become a new embodiment, and the present disclosure does not limit the combination between embodiments.

FIG. 7 illustrates a block diagram of a signal receiving device according to an exemplary embodiment of the present disclosure. As shown in FIG. 7, the device includes:
a position determining module 701, configured to determine a first time domain position of a downlink positioning signal and a second time domain position of an other downlink transmission than the downlink positioning signal; and
a rule determining module 702, configured to determine whether to receive the downlink positioning signal based on the first time domain position, the second time domain position and a conflict judging rule.

In some embodiments, the rule determining module 702 is further configured to: in response to determining, based on the conflict judging rule, that the downlink positioning signal conflicts with the other downlink transmission,
receive the downlink positioning signal when a priority of the downlink positioning signal is higher than a priority of the other downlink transmission; or
not receive the downlink positioning signal when the priority of the downlink positioning signal is lower than the priority of the other downlink transmission.

In some embodiments, the conflict judging rule includes:
determining that the downlink positioning signal conflicts with the other downlink transmission when there is an overlapping symbol between the first time domain position and the second time domain position.

In some embodiments, the conflict judging rule includes:
determining that the downlink positioning signal conflicts with the other downlink transmission when there is an overlapping symbol between the first time domain position and a first extended time domain,
wherein the first extended time domain includes the second time domain position, X symbols or time slots located before the second time domain position, and Y symbols or time slots located after the second time domain position, wherein X, Y are non-negative integers.

In some embodiments, the downlink positioning signal is located within an initial BWP or outside the initial BWP.

In some embodiments, in a case where the downlink positioning signal is located outside the initial BWP, the first extended time domain includes the second time domain position, a first number of symbols or time slots located before the second time domain position, and a second number of symbols or time slots located after the second time domain position, wherein the first number and the second number are non-negative integers,
in a case where the downlink positioning signal is located within the initial BWP, the first extended time domain includes the second time domain position, a third number of symbols or time slots located before the second time domain position, and a fourth number of symbols or time slots located after the second time domain position, wherein the third number and the fourth number are non-negative integers, and
wherein the first number is not smaller than the third number, and the second number is not smaller than the fourth number.

In some embodiments, the other downlink transmission includes a downlink channel and/or a downlink signal corresponding to a servicing cell.

In some embodiments, the downlink channel and/or downlink signal corresponding to the servicing cell includes at least one of:
an SSB of the servicing cell;
an SIB of the servicing cell;
a CSI-RS for a TRS; or
a PDCCH in a CSS associated with a CORESET#0.

In some embodiments, the other downlink transmission includes a downlink channel and/or a downlink signal corresponding to a neighbouring cell.

In some embodiments, the downlink channel and/or downlink signal corresponding to the neighbouring cell includes at least one of:
an SSB of the neighbouring cell;
an SIB of the neighbouring cell; or
a PDCCH in a CSS associated with a CORESET#0.

In some embodiments, the neighbouring cell includes at least one of an intra-frequency neighbouring cell having a same frequency as a serving cell and an inter-frequency neighbouring cell having a different frequency from the serving cell.

In some embodiments, the second time domain position of a downlink transmission of the neighbouring cell is determined according to an SMTC.

In some embodiments, the inter-frequency neighbouring cell includes a first inter-frequency neighbouring cell, and a priority of a frequency corresponding to the first inter-frequency neighbouring cell is higher than a priority of a frequency corresponding to the serving cell.

In some embodiments, as shown in FIG. 8, the device further includes:
a measuring module 703, configured to measure the first inter-frequency neighbouring cell.

In some embodiments, the inter-frequency neighbouring cell includes a second inter-frequency neighbouring cell, and a priority of a frequency corresponding to the second inter-frequency neighbouring cell is lower than a priority of a frequency corresponding to the serving cell.

In some embodiments, as shown in FIG. 8, the device further includes:
a measuring module 703, configured to measure the second inter-frequency neighbouring cell in a case where a signal strength of the servicing cell is not greater than a preset threshold.

In some embodiments, the priority of the downlink positioning signal is lower than the priority of the other downlink transmission, and the other downlink transmission including at least one of:
an other downlink transmission transmitted by the serving cell;
an other downlink transmission transmitted by the intra-frequency neighbouring cell; or
an other downlink transmission transmitted by the first inter-frequency neighbouring cell.

In some embodiments, the priority of the downlink positioning signal is higher than the priority of the other downlink transmission, and the other downlink transmission includes an other downlink transmission transmitted by the second inter-frequency neighbouring cell.

In some embodiments, the terminal is in an RRC idle state.

It is to be noted that for the implementation of the function of the device provided in the above embodiment, the division of the above respective function modules is illustrated as an example, and in an actual application, the above-described function may be assigned to be completed by different functional modules as needed, i.e., the internal structure of the device may be divided into different functional modules in order to complete all or part of the above-described function. In addition, the device provided in the above embodiment belongs to the same concept as the method embodiment, and the specific implementation process thereof may refer to the method embodiment, which will not be repeated herein.

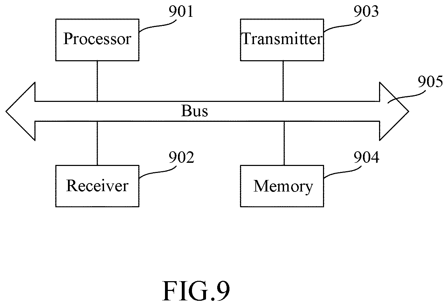

FIG. 9 illustrates a schematic structure diagram of a communication device according to an exemplary embodiment of the present disclosure, and the communication device includes a processor 901, a receiver 902, a transmitter 903, a memory 904, and a bus 905.

The processor 901 includes one or more processing cores, and the processor 901 performs various functional applications and information processing by running software programs and modules.

The receiver 902 and the transmitter 903 may be implemented as one communication component, which may be a communication chip.

The memory 904 is connected to the processor 901 via the bus 905.

The memory 904 may be used to store at least one program code, and the processor 901 is used to execute the at least one program code to implement the various steps in the method embodiment described above.

In addition, the communication device may be a terminal. The memory 1004 may be implemented by any type of volatile or non-volatile storage devices or a combination thereof, and the volatile or non-volatile storage device includes, but is not limited to: a magnetic or optical disc, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an exemplary embodiment, there is also provided a computer-readable storage medium having stored therein executable program codes, and the executable program codes are loaded and executed by a processor to implement the signal receiving method performed by a communication device according to each method embodiment.

In an exemplary embodiment, there is provided a chip including a programmable logic circuit and/or a program instruction, and the chip runs on a terminal to implement the signal receiving method according to each method embodiment.

In an exemplary embodiment, there is provided a computer program product that, when being executed by a processor of a terminal, implements the signal receiving method according to each method embodiment.

A person skilled in the art may understand that all or some of the steps for implementing the above embodiment may be accomplished by hardware, or may be accomplished by a program that instructs the relevant hardware, the program may be stored in a computer-readable storage medium, and the storage medium mentioned above may be a read-only memory, a magnetic disc, or a compact disc, and the like.

The above mentioned are only optional embodiments of the present disclosure, and are not intended to limit the present disclosure, and any modifications, equivalent replacements, improvements, etc. made within the spirit and principle of the present disclosure shall be included in the protection scope of the present disclosure.

## Claims

1. A signal receiving method performed by a terminal, comprising:
determining a first time domain position of a downlink positioning signal and a second time domain position of an other downlink transmission than the downlink positioning signal; and
determining whether to receive the downlink positioning signal based on the first time domain position, the second time domain position and a conflict judging rule.

2. The method according to claim 1, wherein determining whether to receive the downlink positioning signal comprises: in response to determining, based on the conflict judging rule, that the downlink positioning signal conflicts with the other downlink transmission,
receiving the downlink positioning signal when a priority of the downlink positioning signal is higher than a priority of the other downlink transmission; or
not receiving the downlink positioning signal when the priority of the downlink positioning signal is lower than the priority of the other downlink transmission.

3. The method according to claim 1 or 2, wherein the conflict judging rule comprises:
determining that the downlink positioning signal conflicts with the other downlink transmission when there is an overlapping symbol between the first time domain position and the second time domain position.

4. The method according to claim 1 or 2, wherein the conflict judging rule comprises:
determining that the downlink positioning signal conflicts with the other downlink transmission when there is an overlapping symbol between the first time domain position and a first extended time domain,
wherein the first extended time domain comprises the second time domain position, X symbols or time slots located before the second time domain position, and Y symbols or time slots located after the second time domain position, wherein X, Y are non-negative integers.

5. The method according to claim 4, wherein the downlink positioning signal is located within an initial bandwidth part, BWP, or outside the initial BWP.

6. The method according to claim 5, wherein in a case where the downlink positioning signal is located outside the initial BWP, the first extended time domain comprises the second time domain position, a first number of symbols or time slots located before the second time domain position, and a second number of symbols or time slots located after the second time domain position, wherein the first number and the second number are non-negative integers,
wherein in a case where the downlink positioning signal is located within the initial BWP, the first extended time domain comprises the second time domain position, a third number of symbols or time slots located before the second time domain position, and a fourth number of symbols or time slots located after the second time domain position, wherein the third number and the fourth number are non-negative integers, and
wherein the first number is not smaller than the third number, and the second number is not smaller than the fourth number.

7. The method according to any one of claims 2 to 6, wherein the other downlink transmission comprises a downlink channel and/or a downlink signal corresponding to a servicing cell.

8. The method according to claim 7, wherein the downlink channel and/or downlink signal corresponding to the servicing cell comprises at least one of:
a synchronization signal block, SSB, of the servicing cell;
a system information block, SIB, of the servicing cell;
a channel state information reference signal, CSI-RS, for a tracking reference signal, TRS; and
a physical downlink control channel, PDCCH, in a common search space, CSS, associated with a control resource set 0, CORESET#0.

9. The method according to any one of claims 2 to 6, wherein the other downlink transmission comprises a downlink channel and/or a downlink signal corresponding to a neighbouring cell.

10. The method according to claim 9, wherein the downlink channel and/or downlink signal corresponding to the neighbouring cell comprises at least one of:
an SSB of the neighbouring cell;
an SIB of the neighbouring cell; and
a PDCCH in a CSS associated with a CORESET#0.

11. The method according to claim 9 or 10, wherein the neighbouring cell comprises at least one of an intra-frequency neighbouring cell having a same frequency as a serving cell and an inter-frequency neighbouring cell having a different frequency from the serving cell.

12. The method according to claim 11, wherein the second time domain position of a downlink transmission of the neighbouring cell is determined according to an SSB-based measurement timing configuration, SMTC.

13. The method according to claim 11, wherein the inter-frequency neighbouring cell comprises a first inter-frequency neighbouring cell, and a priority of a frequency corresponding to the first inter-frequency neighbouring cell is higher than a priority of a frequency corresponding to the serving cell.

14. The method according to claim 13, further comprising:
measuring the first inter-frequency neighbouring cell.

15. The method according to claim 11, wherein the inter-frequency neighbouring cell comprises a second inter-frequency neighbouring cell, and a priority of a frequency corresponding to the second inter-frequency neighbouring cell is lower than a priority of a frequency corresponding to the serving cell.

16. The method according to claim 15, further comprising:
measuring the second inter-frequency neighbouring cell in a case where a signal strength of the servicing cell is not greater than a preset threshold.

17. The method according to any one of claims 2 to 16, wherein the priority of the downlink positioning signal is lower than the priority of the other downlink transmission, and the other downlink transmission comprising at least one of:
an other downlink transmission transmitted by a serving cell;
an other downlink transmission transmitted by an intra-frequency neighbouring cell; and
an other downlink transmission transmitted by a first inter-frequency neighbouring cell.

18. The method according to any one of claims 2 to 16, wherein the priority of the downlink positioning signal is higher than the priority of the other downlink transmission, and the other downlink transmission comprises an other downlink transmission transmitted by a second inter-frequency neighbouring cell.

19. The method according to any one of claims 1 to 18, wherein the terminal is in an RRC idle state.

20. A signal receiving device, comprising:
a position determining module, configured to determine a first time domain position of a downlink positioning signal and a second time domain position of an other downlink transmission than the downlink positioning signal; and
a rule determining module, configured to determine whether to receive the downlink positioning signal based on the first time domain position, the second time domain position and a conflict judging rule.

21. The device according to claim 20, wherein the rule determining module is further configured to: in response to determining, based on the conflict judging rule, that the downlink positioning signal conflicts with the other downlink transmission,
receive the downlink positioning signal when a priority of the downlink positioning signal is higher than a priority of the other downlink transmission; or
not receive the downlink positioning signal when the priority of the downlink positioning signal is lower than the priority of the other downlink transmission.

22. The device according to claim 20 or 21, wherein the conflict judging rule comprises:
determining that the downlink positioning signal conflicts with the other downlink transmission when there is an overlapping symbol between the first time domain position and the second time domain position.

23. The device according to claim 20 or 21, wherein the conflict judging rule comprises:
determining that the downlink positioning signal conflicts with the other downlink transmission when there is an overlapping symbol between the first time domain position and a first extended time domain,
wherein the first extended time domain comprises the second time domain position, X symbols or time slots located before the second time domain position, and Y symbols or time slots located after the second time domain position, wherein X, Y are non-negative integers.

24. The device according to claim 23, wherein the downlink positioning signal is located within an initial BWP or outside the initial BWP.

25. The device according to claim 24, wherein in a case where the downlink positioning signal is located outside the initial BWP, the first extended time domain comprises the second time domain position, a first number of symbols or time slots located before the second time domain position, and a second number of symbols or time slots located after the second time domain position, wherein the first number and the second number are non-negative integers,
wherein in a case where the downlink positioning signal is located within the initial BWP, the first extended time domain comprises the second time domain position, a third number of symbols or time slots located before the second time domain position, and a fourth number of symbols or time slots located after the second time domain position, wherein the third number and the fourth number are non-negative integers, and
wherein the first number is not smaller than the third number, and the second number is not smaller than the fourth number.

26. The device according to any one of claims 21 to 25, wherein the other downlink transmission comprises a downlink channel and/or a downlink signal corresponding to a servicing cell.

27. The device according to claim 26, wherein the downlink channel and/or downlink signal corresponding to the servicing cell comprises at least one of:
an SSB of the servicing cell;
an SIB of the servicing cell;
a CSI-RS for a TRS; or
a PDCCH in a CSS associated with a CORESET#0.

28. The device according to any one of claims 21 to 25, wherein the other downlink transmission comprises a downlink channel and/or a downlink signal corresponding to a neighbouring cell.

29. The device according to claim 28, wherein the downlink channel and/or downlink signal corresponding to the neighbouring cell comprises at least one of:
an SSB of the neighbouring cell;
an SIB of the neighbouring cell; or
a PDCCH in a CSS associated with a CORESET#0.

30. The device according to claim 28 or 29, wherein the neighbouring cell comprises at least one of an intra-frequency neighbouring cell having a same frequency as a serving cell and an inter-frequency neighbouring cell having a different frequency from the serving cell.

31. The device according to claim 30, wherein the second time domain position of a downlink transmission of the neighbouring cell is determined according to an SMTC.

32. The device according to claim 30, wherein the inter-frequency neighbouring cell comprises a first inter-frequency neighbouring cell, and a priority of a frequency corresponding to the first inter-frequency neighbouring cell is higher than a priority of a frequency corresponding to the serving cell.

33. The device according to claim 32, further comprising:
a measuring module, configured to measure the first inter-frequency neighbouring cell.

34. The device according to claim 30, wherein the inter-frequency neighbouring cell comprises a second inter-frequency neighbouring cell, and a priority of a frequency corresponding to the second inter-frequency neighbouring cell is lower than a priority of a frequency corresponding to the serving cell.

35. The device according to claim 34, further comprising:
a measuring module, configured to measure the second inter-frequency neighbouring cell in a case where a signal strength of the servicing cell is not greater than a preset threshold.

36. The device according to any one of claims 21 to 35, wherein the priority of the downlink positioning signal is lower than the priority of the other downlink transmission, and the other downlink transmission comprising at least one of:
an other downlink transmission transmitted by a serving cell;
an other downlink transmission transmitted by an intra-frequency neighbouring cell; or
an other downlink transmission transmitted by a first inter-frequency neighbouring cell.

37. The device according to any one of claims 21 to 35, wherein the priority of the downlink positioning signal is higher than the priority of the other downlink transmission, and the other downlink transmission comprises an other downlink transmission transmitted by a second inter-frequency neighbouring cell.

38. The device according to any one of claims 20 to 37, wherein the terminal is in an RRC idle state.

39. A terminal, comprising:
a processor; and
a transceiver connected with the processor,
wherein the processor is configured to load and execute executable instructions to implement the signal receiving method according to any one of claims 1 to 19.

40. A computer-readable storage medium having stored thereon executable program codes that, when being loaded and executed by a processor, implement the signal receiving method according to any one of claims 1 to 19.
